Europäisches Patentamt

European Patent Office

Office européen des brevets

(11) Veröffentlichungsnummer : **0 056 246**
**B1**

(12) **EUROPÄISCHE PATENTSCHRIFT**

(45) Veröffentlichungstag der Patentschrift :
11.04.84

(51) Int. Cl.³ : **C 01 C 1/12, C 10 K 1/12**

(21) Anmeldenummer : **82100065.0**

(22) Anmeldetag : **07.01.82**

(54) **Verfahren zur selektiven Entfernung und Gewinnung von Ammoniak aus ammoniak- und schwefelwasserstoffhaltigen Gasgemischen.**

(30) Priorität : **10.01.81 DE 3100568**

(43) Veröffentlichungstag der Anmeldung :
**21.07.82 Patentblatt 82/29**

(45) Bekanntmachung des Hinweises auf die Patenterteilung : **11.04.84 Patentblatt 84/15**

(84) Benannte Vertragsstaaten :
**AT BE CH DE FR GB IT LI LU NL SE**

(56) Entgegenhaltungen :
**DE-A- 2 030 874
DE-C- 568 638
DE-C- 593 736
US-A- 2 720 526
DAS GAS- UND WASSERFACH, Band 70, Nr. 14, 2. April 1927 E. TERRES et al. "Studien über das Burkheisersche Ammoniumsulfit-Bisulfit-Verfahren" Seiten 309 bis 310**

(73) Patentinhaber : **Bergwerksverband GmbH
Franz-Fischer-Weg 61
D-4300 Essen 13 (DE)**

**Ruhrkohle Aktiengesellschaft
Rellinghauser Strasse 1
D-4300 Essen 1 (DE)**

(72) Erfinder : **Schaefer, Nikolaus
Brunhildenstrasse 55
D-4300 Essen 13 (DE)**
Erfinder : **Dellmann, Winfried
Dresdener Strasse 13
D-4618 Kamen (DE)**
Erfinder : **Louis, Gerd, Dr.
Karl-Meyer-Strasse 23
D-4300 Essen 12 (DE)**

EP 0 056 246 B1

Verfahren zur selektiven Entfernung und Gewinnung von Ammoniak aus ammoniak- und schwefelwasserstoffhaltigen Gasgemischen

Die Erfindung betrifft ein Verfahren gemäß dem Oberbegriff des Hauptanspruches.

Bei der Verkokung von Steinkohle bilden sich Pyrolysegase, die Ammoniak enthalten. Die Entfernung des Ammoniaks aus dem Kokereigas und seine Verarbeitung zu Ammoniumsulfat nach dem bekannten indirekten und halbdirekten Verfahren trug bis etwa 1962 zu den Verkokungskosten bei. Die danach einsetzende Degression der Erlöse für Kohlenwertstoffe allgemein und für ammoniakhaltige Produkte im besonderen führte dazu, Verfahren zur Vernichtung des Kokereiammoniaks einzuführen, das Ammoniak also ausschließlich unter dem Gesichtspunkt der Gasreinigung aus dem Kokereigas zu entfernen.

Angesichts steigender Energie- und Rohstoffpreise und der dadurch verbesserten Erlössituation für Kokereiammoniak scheint es heute nicht mehr sinnvoll, den Kohlenwertstoff Ammoniak zu vernichten. Richtig ist vielmehr, das Ammoniak zu gewinnen. — Dies gilt aber auch für alle anderen Gasgemische, die — wie das Kokereigas — unter anderem Ammoniak und Schwefelwasserstoff enthalten.

Es ist bereits seit längerem bekannt, daß man Ammoniak aus Kohlendestillationsgasen mit einer wässrigen Ammoniumhydrogensulfitlösung (Ammoniumbisulfitlösung) auswaschen kann. Dabei bildet sich Ammoniumsulfit, das z. B. zu Ammoniumsulfat oxidiert werden kann. Die Waschlösung dieses bekannten Verfahrens bindet jedoch das Ammoniak nicht selektiv, sondern es kommt zu einer Nebenreaktion mit dem Schwefelwasserstoff des Kohlendestillationsgases, wodurch es zu einem Abbau von Schwefeldioxid zugunsten einer Schwefelthiosulfatanreicherung kommt, wodurch jedoch das Aufnahmevermögen der Waschlösung für Ammoniak sinkt.

Der Grundgedanke des sogenannten « Burkheiserschen Verfahrens » baut auf der größeren Löslichkeit des Ammoniumbisulfits gegenüber dem Ammoniumsulfit in der Weise auf, daß vom Schwefel gereinigtes, rohes Koksofengas mit einer Ammoniumbisulfitlösung zur Absorption des Ammoniaks gewaschen wird. Die gebrauchte Waschlösung wird wieder mit schwefliger Säure übersättigt und kehrt als Waschflüssigkeit in den Kreislauf zurück (Das Gas- und Wasserfach 70 (1927), Seiten 309-310).

Der Erfindung liegt die Aufgabe zugrunde, aus ammoniak- und schwefelwasserstoffhaltigen Gasgemischen, insbesondere aus Koksofengas das Ammoniak selektiv durch eine Wäsche zu entfernen und als konzentrierte wässrige Lösung zu gewinnen.

Diese Aufgabe wird erfindungsgemäß durch die kennzeichnenden Merkmale von Anspruch 1 gelöst. Weiterbildungen der Erfindung ergeben sich aus den Unteransprüchen.

Die Gasgemische können zum Beispiel entstanden sein bei der Verflüssigung, Vergasung, Schwelung oder Verkokung von Kohle, aber auch bei der Erdöl- oder Erdgasverarbeitung und anderen chemischen Prozessen.

Die eingesetzte Waschlösung kann sich zu beliebigen Teilen aus Ammoniumsulfit und Ammoniumhydrogensulfit zusammensetzen, wobei relativ höhere Anteile an Ammoniumhydrogensulfit den Grad der Ammoniakanreicherung in der Waschlösung verbessern ; ein typischer Wert sind gleiche Teile an beiden Substanzen — zusammen bilden beide Substanzen typischerweise eine etwa 10-40 %ige wässrige Lösung.

Die gewünschte Selektivität der Ammoniakauswaschung (gegenüber $H_2S$) wird also erreicht durch die Herabsetzung der Oberflächenspannung von etwa $80 \times 10^{-5}$ N/cm der reinen wässrigen Lösung von Ammoniumsulfit/Ammoniumhydrogensulfit auf Werte bevorzugt zwischen etwa $20 \times 10^{-5}$ und $70 \times 10^{-5}$ N/cm mittels oberflächenaktiver Stoffe, beispielsweise Natriumdodecylhydrogensulfat/Dodecylamin, Phenole und Homologe, Pyridinbasen und andere, die aber möglichst zu keiner wesentlichen Schaumbildung führen sollten. Dabei führen abnehmende Oberflächenspannungen (aufgrund höherer Zugabe an oberflächenaktiven Stoffen) überraschenderweise zu einer immer größeren Verminderung des Abbaus an Sulfit durch den Schwefelwasserstoff, d. h. einer gesteigerten Selektivität der Ammoniakauswaschung. Es ist deshalb eine Frage des im Ausgangsgasgemisch vorhandenen Schwefelwasserstoffanteiles einerseits und der gewünschten Selektivität andererseits, wie weitgehend die Oberflächenspannung vermindert werden muß. Nur in Extremfällen besonders hoher Schwefelwasserstoffanteile und/oder besonders hoher gewünschter Selektivitäten ist es denkbar, daß auch durch eine extrem hohe Zugabe an oberflächenaktiven Stoffen nicht mehr das gewünschte Ziel erreicht wird.

Es wurde insbesondere überraschenderweise gefunden, daß durch den Zusatz eines oberflächenaktiven Stoffes, der die Oberflächenspannung der Waschlösung bis auf den gewünschten Wert herabsetzt, eine hohe Selektivität der Waschlösung gegenüber Ammoniak erzielt wird.

Als erfindungsgemäßer Korrosionsinhibitoren kann der Waschlösung z. B. das sogenannte FERRAMEEN zugesetzt werden, das gleichzeitig oberflächenaktiv ist.

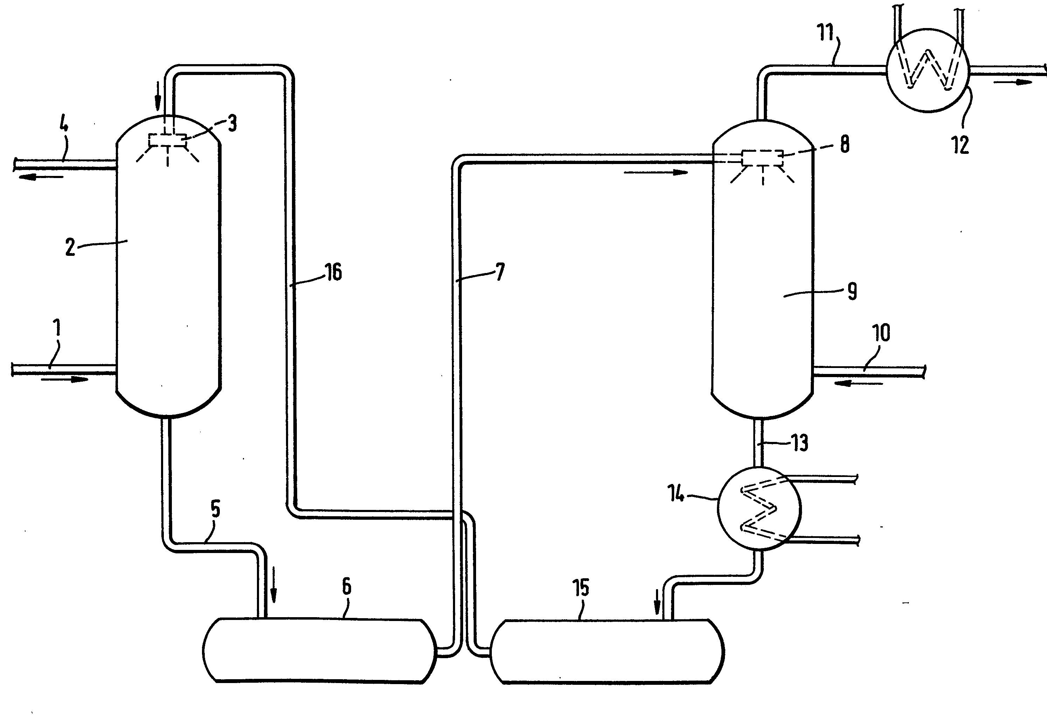

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Koksofenrohgas, das Schwefelwasserstoff und Ammoniak enthält, tritt nach Kühlung durch die Leitung 1 in den Gaswascher 2 ein, der durch Leitung 16 mit der im Kreislauf geführten Waschlösung über die Brause 3 beaufschlagt wird. Nach dem selektiven Auswaschen des Ammoniaks verläßt das hiervon befreite Koksofenrohgas den Gaswascher 2 über die Leitung 4 in die weitere Gasreinigungsanlage. Die an Ammoniak angereicherte Waschlösung wird durch Leitung 5 in den Sammelbehälter 6 abgelassen. Von hier gelangt die Waschlösung durch die Leitung 7 in eine Abtreibekolonne 9, der sie über eine Verteilereinrichtung 8 aufgegeben wird. Im Abtreiber 9 wird das von der Waschlösung gebundene Ammoniak durch bei 10 aufgegebenen Dampf abgetrieben. Das gasförmige Ammoniak verläßt den Abtreiber 9 zusammen mit dem Wasserdampf durch die Leitung 11 und wird im Kondensator 12 als wässrige Ammoniaklösung niedergeschlagen. Die abgetriebene Waschlösung verläßt den Abtreiber 9 durch die Leitung 13, wird im Kühler 14 gekühlt und fließt in den Behälter 15. Aus dem Behälter 15 wird die Waschlösung durch Leitung 16 wieder auf den Gaswascher 2 über die Brause 3 aufgegeben.

Die mit der Erfindung erzielbaren Vorteile bestehen insbesondere darin, daß das Kokereiammoniak aus dem Koksofenrohgas nicht nur entfernt, sondern auch auf wirtschaftliche Weise in Form einer konzentrierten, wässrigen Ammoniaklösung gewonnen werden kann. Ein wesentlicher Vorteil der Erfindung besteht darin, daß durch die Herabsetzung der Oberflächenspannung der Waschlösung die Selektivität der Ammoniakwäsche gesteigert wird.

Beispiel 1

1 000 $m_n^3$/h eines auf 25 °C gekühlten, teilgereinigten Koksofengases mit einem Ammoniakgehalt von 5 g/$m_n^3$ und einem Schwefelwasserstoffgehalt von 1 g/$m_n^3$ werden mit einer Waschlösung in einer Menge von 240 kg/h gewaschen. Die Waschlösung ist eine wässrige Lösung von 17,0 Gew.-% Schwefeldioxid und 9,5 Gew.-% Ammoniak, deren Oberflächenspannung durch Zusatz von Dodecylamin auf $53 \times 10^{-5}$ N/cm herabgesetzt worden ist.

Das im Koksofenrohgas enthaltene Ammoniak setzt sich bei der Wäsche vollständig zu Ammoniumsulfit um, während gleichzeitig nur 0,1 kg/h Schwefelwasserstoff von der Waschlösung aufgenommen werden.

Die angereicherte Waschlösung wird dann auf einen Abtreiber gegeben, wo bei einer Temperatur von 102 bis 107 °C das gebundene Ammoniak mit 210 kg/h Dampf abgetrieben wird.

Etwa 5 kg/h Ammoniak verlassen in gasförmigem Zustand mit dem Dampf den Abtreiber und werden als Ammoniakwasser niedergeschlagen.
($m_n^3$ = Kubikmeter im Normzustand).

Beispiel 2

1 000 $m_n^3$/h eines (ungereinigten) Koksofengases mit einem Gehalt von 5 g NH$_3$/$m_n^3$ und 8 g H$_2$S/$m_n^3$ werden mit 200 kg/h Waschlösung, die 30 Massenprozent Ammoniak und Schwefeldioxid im Molverhältnis NH$_3$ : SO$_2$ = 1,5 : 1 enthält, gewaschen. Die Temperaturen des Gases und der Waschlösung betragen vorzugsweise weniger als 32 °C. Dabei wird das Ammoniak bis auf einen Restgehalt von weniger als 0,02 g/$m_n^3$ aus dem Kokereigas entfernt; gleichzeitig werden durchschnittlich 18 Massenprozent des H$_2$S von der Waschlösung absorbiert. Setzt man nun der Waschlösung 0,1 % Phenol und 0,1 % Pyridin zu und wäscht damit das Kokereigas, so erzielt man den gleichen Auswaschungsgrad für NH$_3$; es werden aber in diesem Fall nur noch 12 % des H$_2$S ausgewaschen. Erhöht man den Zuschlag an oberflächenaktiven Stoffen auf 0,5 % Phenol und 0,5 % Pyridin, so erreicht man eine weitere Erhöhung der Selektivität der Wäsche: bei gleichbleibender Ammoniakabsorption wird der H$_2$S-Auswaschungsgrad auf etwa 5 % erniedrigt.

Die mit der Erfindung erzielbaren Vorteile bestehen also insbesondere darin, daß durch die Erhöhung der Selektivität der Ammoniakentfernung aus Kokereigasen Nebenreaktionen in den Hintergrund gedrängt werden, wodurch längere Einsatzzeiten der Waschlösung erreicht werden.
($m_n^3$ = Kubikmeter im Normzustand).

**Ansprüche**

1. Verfahren zur selektiven Entfernung und Gewinnung von Ammoniak aus ammoniak- und schwefelwasserstoffhaltigen Gasgemischen durch eine Wäsche (Gaswäsche) mit im Kreislauf geführten wässrigen Lösungen von Ammoniumsulfit/Ammoniumhydrogensulfit, dadurch gekennzeichnet, daß man die Gasgemische mit einer Ammoniumsulfit/Ammoniumhydrogensulfit-Lösung (Waschlösung), deren Oberflächenspannung unterhalb $80 \times 10^{-5}$ N/cm beträgt, wäscht, hierauf aus der mit Ammoniak angereicherten Waschlösung Ammoniakgas in an sich bekannter Weise abtreibt und gewinnt, während die abgetriebene Waschlösung im Kreislauf in die Gaswäsche zurückgeführt wird.

2. Verfahren nach Anspruch 1, dadurch gekennzeichnet, daß die Oberflächenspannung 20 bis $70 \times 10^{-5}$ N/cm beträgt.

3. Verfahren nach Anspruch 1, dadurch gekennzeichnet, daß das Gasgemisch ein Koksofengas ist.

4. Verfahren nach Anspruch 3, dadurch gekennzeichnet, daß die Oberflächenspannung 40 bis $70 \times 10^{-5}$ N/cm beträgt.

5. Verfahren nach einem oder mehreren der Ansprüche 1 bis 4, dadurch gekennzeichnet, daß man zum Einstellen der Oberflächenspannung der Waschlösung oberflächenaktive Stoffe, nämlich Alkylsulfate oder Alkylamine sowie Pyridinbasen oder Phenol und Homologe zusetzt.

6. Verfahren nach Anspruch 5, dadurch gekennzeichnet, daß man der Waschlösung 0,01 bis 2,0 % Phenol und Homologe und/oder 0,01 bis 2,0 % Pyridinbasen zusetzt.

7. Verfahren nach den Ansprüchen 3 und 5, dadurch gekennzeichnet, daß man der Waschlösung 0,05 bis 1,0 % Phenol und Homologe und 0,05 bis 1,0 % Pyridinbasen zusetzt.

8. Verfahren nach einem oder mehreren der Ansprüche 1 bis 7, dadurch gekennzeichnet, daß die Temperaturen des Gases und der Waschlösung weniger als 32 °C betragen.

9. Verfahren nach einem oder mehreren der Ansprüche 1 bis dadurch gekennzeichnet, daß man der Waschlösung Korrosionsinhibitoren zusetzt.

## Claims

1. Process of selective removal and recovery of ammonium from ammonium- and hydrogen sulphide-containing gas mixtures by means of scrubbing (gas scrubbing) using circulating aqueous solutions of ammonium sul- phite/ammonium hydrogen sulphite, charac- terized in that the gas mixtures are scrubbed by means of an ammonium sulphite/ammonium hydrogen sulphite solution (scrubbing solution) having a surface tension of less than $80 \times 10^{-5}$ N/cm, and subsequently stripped according to a generally known method to recover the ammonium gas from the ammonium-enriched scrubbing solution, whereas the stripped solution is recycled to the gas scrubbing system.

2. Process according to claim 1, characterized by the surface tension being comprised between 20 and $70 \times 10^{-5}$ N/cm.

3. Process according to claim 1, characterized by the gas mixture consisting of a coke oven gas.

4. Process according to claim 3, characterized by the surface tension being comprised between 40 and $70 \times 10^{-5}$ N/cm.

5. Process according to anyone of claims 1 through 4, characterized by the admixture of surfactants, e. g. alkyl sulphates or alkylamines as well as pyridine bases or phenol and homologues in order to adjust the surface tension of the scrubbing solution.

6. Process according to claim 5, characterized by the admixture of 0.01 to 2.0 % phenol and homologues and/or between 0.01 and 2.0 % of pyridine bases to the scrubbing solution.

7. Process according to claims 3 and 5, characterized by the admixture of 0.05 to 1.0 % of phenol and homologues and between 0.05 and 1.0 % of pyridine bases to the scrubbing solution.

8. Process according to anyone of claims 1 through 7, characterized in that way temperatures of the gas and the scrubbing solution are below 32 °C.

9. Process according to anyone of claims 1 through 8, characterized by the addition of corrosion inhibitors to the scrubbing solution.

## Revendications

1. Procédé d'élimination sélective et d'obtention de l'ammoniac dans des mélanges gazeux contenant de l'ammoniac et de l'hydrogène sulfuré, par un lavage (lavage de gaz) avec des solutions aqueuses de sulfite d'ammonium/bisul- fite d'ammonium, caractérisé en ce qu'on lave les mélanges gazeux avec une solution de sulfite d'ammonium/bisulfite d'ammonium (solution de lavage) dont la tension superficielle est inférieure à $80 \times 10^{-5}$ N/cm, après quoi on élimine et récupère d'une manière connue en soi le gaz ammoniac de la solution de lavage enrichie en ammoniac, tandis que la solution de lavage traitée par la vapeur est renvoyée en circuit fermé dans le laveur à gaz.

2. Procédé selon la revendication 1, caractérisé en ce que la tension superficielle est de 20 à $70 \times 10^{-5}$ N/cm.

3. Procédé selon la revendication 1, caractérisé en ce que le mélange gazeux est un gaz de four à coke.

4. Procédé selon la revendication 3, caractérisé en ce que la tension superficielle est de 40 à $70 \times 10^{-5}$ N/cm.

5. Procédé selon l'une quelconque des revendications 1 à 4, caractérisé en ce que pour ajuster la tension superficielle de la solution de lavage, on ajoute des substances tensio-actives, notamment des alcoylsulfates ou des alcoylamines ainsi que des bases pyridiniques ou du phénol et ses homologues.

6. Procédé selon la revendication 5, caractérisé en ce qu'on ajoute à la solution de lavage 0,01 à 2,0 % de phénol et homologues et/ou 0,01 à 2,0 % de bases pyridiniques.

7. Procédé selon l'une quelconque des revendications 3 et 5, caractérisé en ce qu'on ajoute à la solution de lavage 0,05 à 1,0 % de phénol et homologues et 0,05 à 1,0 % de bases pyridiniques.

8. Procédé selon l'une quelconque des revendications 1 à 7, caractérisé en ce que les températures du gaz et de la solution de lavage sont inférieures à 32 °C.

9. Procédé selon l'une quelconque des revendications 1 à 8, caractérisé en ce qu'on ajoute à la solution de lavage des inhibiteurs de corrosion.